(19) Europäisches Patentamt
European Patent Office
Office européen des brevets

(11) Publication number: **0 224 932**
**A2**

(12) # EUROPEAN PATENT APPLICATION

(21) Application number: 86116907.6

(51) Int. Cl.[4]: H 01 M 10/39

(22) Date of filing: 04.12.86

(30) Priority: 06.12.85 JP 273441/85

(43) Date of publication of application:
10.06.87 Bulletin 87/24

(84) Designated Contracting States:
DE FR GB

(71) Applicant: HITACHI, LTD.
6, Kanda Surugadai 4-chome
Chiyoda-ku Tokyo 101(JP)

(71) Applicant: Hitachi Engineering Co., Ltd.
2-1, Saiwai-cho 3-chome
Hitachi-shi Ibaraki 317(JP)

(72) Inventor: Hoshino, Satoshi
16-8 Asahicho-3-chome
Hitachi-shi(JP)

(72) Inventor: Wada, Motoi
5-2-402 Nishinarusawacho-1-chome
Hitachi-shi(JP)

(74) Representative: Strehl, Schübel-Hopf, Groening, Schulz
Widenmayerstrasse 17 Postfach 22 03 45
D-8000 München 22(DE)

(54) **Sodium-sulfur battery.**

(57) The present invention relates to an internal structure of cathode of a sodium-sulfur battery, and particularly to a sodium-sulfur battery which is improved to extend its life by keeping low the resistivity of sodium ion conductive solid electrolyte (1) through elimination of impurities in sodium which acts as a cathode active substance (2). That is, although it has hitherto been known that the solid electrolyte (1) is deteriorated by impurities such as $K^-$, $Ca^{2-}$ and the like in sodium which is the cathode active substance (2), a method for improving this has not been known. According to this invention, a porous adsorbent (12) is immersed in sodium which is the cathode active substance (2) to eliminate the impurities in the sodium, resulting in extension of the battery life.

FIG. 1

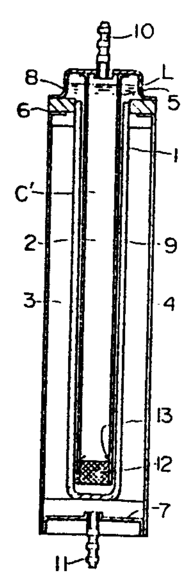


EP 0 224 932 A2

# SODIUM-SULFUR BATTERY

## BACKGROUND OF THE INVENTION

The present invention relates to an internal structure of a cathode of sodium-sulfur battery, and particularly to a sodium-sulfur battery which is improved to extend the life by keeping low resistivity of sodium ion conductive solid electrolyte through elimination of impurities in sodium which acts as a cathode active substance.

The sodium-sulfur battery is a high-temperature secondary battery in which the solid electrolyte permitting only sodium ion to pass through is interposed such that molten (liquid) sodium acting as a cathode active substance is disposed in one side and molten sulfur acting as an anode active substance is disposed in the other side, whereby charge and discharge may be carried out at a temperature range of about 300°C to 350°C.

Such charge and discharge reactions are represented by:

$$2Na^{+} + xS + 2e^{-} \underset{\text{charge}}{\overset{\text{discharge}}{\rightleftarrows}} Na_2\,Sx$$

In discharge, an atomic sodium as the cathode active substance liberates electrons to become sodium ion, which passes through the barrier of the solid electrolyte to

react with the sulfur of the anode active substance and to produce the sodium polysulfide ($Na_2$ Sx). In charge, the sodium polysulfide ($Na_2$ Sx) is separated to the sodium (Na) and the sulfur (S) by applying the negative voltage larger than the voltage of opened circuit.

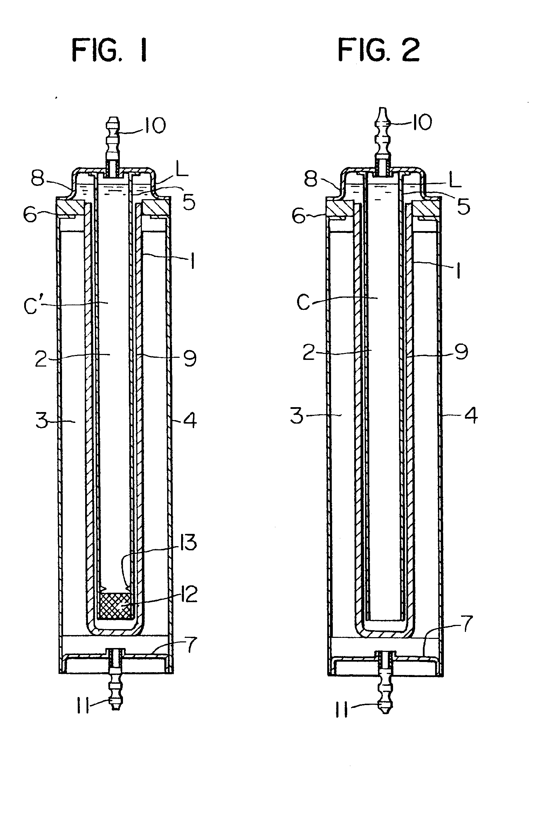

Fig. 2 illustrates an example of the conventional sodium-sulfur battery. Refering to the drawing, the sodium-sulfur battery consists of the molten sodium 2 of the cathode active substance and the molten sulfur 3 of the anode active substance filled inside and outside of a tubular solid electrolyte 1, respectively. Since the molten sulfur 3 has no electronic conductivity, a porous carbon fiber is impregnated with the molten sulfur 3 in order to give the electronic conductivity thereto. An anode container 4 in which the molten sulfur 3 is enclosed and a cathode tube 5 in which the molten sodium 2 is enclosed have the function of electrode, respectively, and the anode container 4 and the cathode tube 5 are connected in an insulated manner by an α-alumina 6 which acts an insulating material.

Also, an anode cap 7 secured to the anode container 4 and a cathode cap 8 secured to the cathode tube 5 have the function of electrode as well as the anode container 4 and the cathode tube 5. A porous metal fiber 9, which is inserted into the molten sodium 2, has the function of retainer of the molten sodium 2 for preventing a drastic exothermic reaction

of the molten sodium 2 and the molten sulfur 3 when the solid electrolyte 1 is broken. To the cathode cap 8 is secured a sodium injection tube 10 for injecting sodium into the cathode tube 5. "C" designates a cathode which consists of the molten sodium 2 and the metal fiber 9. "L" designates a liquid surface of the sodium 2. The solid electrolyte 1 in the sodium-sulfur battery is a main part which influences the performance of battery, and materials called β-alumina or β"-alumina are used as such electrolyte, which can be produced by mixing $Na_2O$, $Li_2O$ and the like with usual alumina powder, molding the mixture under an elevated pressure, followed by sintering at a high temperature. As to the characteristics of the solid electrolyte 1 for the sodium-sulfur battery, it is required that it has high density and no gas permeability, the mechanical strength is high, the ion conductivity is large, the resistance of grain boundaries (which means that the flow of sodium is biased between the grains so that it is hard to flow.) is low and the electric conductivity is good, the distribution of grain size is uniform, and the grain is fine and not deteriorative. The main cause of deterioration of the solid electrolyte 1 which has the particular characteristics as mentioned above, is the influence of impurities such as potassium ion ($K^+$), calcium ion ($Ca^{2+}$) and the like contained in the molten sodium 2.

The electric conductivity of the solid

electrolyte 1 with respect to the sodium ion ($Na^+$) is deteriorated remarkably due to the existence of impurity ions ($K^+$, $Ca^{2+}$, etc.) contained in the molten sodium 2 as mentioned above, resulting in the high internal resistance of battery. Also, in the crystal structure of the solid electrolyte 1 ($\beta$ - $A\ell_2O_3$, $\beta$"-$A\ell_2O_3$ or the like) consisting of the sodium ion ($Na^+$), the substitution of the sodium ion ($Na^+$) by the impurities ($Ka^+$, $Ca^{2+}$, etc.) causes the change of volume of the crystal single particle. The change of volume results in that stress is produced inside of the solid electrolyte 1 or near the surface thereof so that it accelerates the deterioration of the solid electrolyte 1 because the crystal particles are different in size from the point of probability theory.

The deterioration mechanism of the solid electrolyte used for the sodium-sulfur battery is due to the damage when the sodium ion permeates through or to the action such as extreme increase of resistance. These are much influenced by the impurities contained in the sodium.

The deterioration phenomena of the solid electrolyte due to the impurities are described in the "Kagaku Kogyo" (Chemical Industries), August, 1980, page 88, "$\beta$-alumina (2)". However, it refers to neither the countermeasure nor the method of improvement for such deterioration.

Furthermore, the Japanese Patent Publication

No. 8552/83 discloses the improvements of strength and non-corrosiveness of the solid electrolyte for sodium-sulfur battery, but it describes neither the influence due to the impurities in sodium nor the method of improvement.

SUMMARY OF THE INVENTION

This invention has been done in view of the above mentioned circumstances, and is aimed to provide a sodium-sulfur battery in which the sodium ion conductive solid electrolyte is prevented from deterioration, whereby the battery life is remarkably extended.

Next, the basic principle of this invention is described.

The life of the whole system of sodium-sulfur battery is often decided by deterioration phenomenon of the sodium ion conductive solid electrolyte itself. That is, the solid electrolyte through which a certain quantity of electric current has passed, sometimes generates micro-cracking or shows an action that the value of resistance increases extremely. Thus, in the deteriorated sodium-sulfur battery, the solid electrolyte is easy to break and at the time of breakdown, the sodium which has high chemical reactivity reacts with sulfur in a short time to produce exothermic heat. This is not preferable from an aspect of safety. One of the causes of deterioration of the solid electrolyte used in the sodium-sulfur battery is largely due to

the influence of impurity contained in the sodium. Even the high purity sodium contains a very small amount of impurities such as potassium, calcium, hydrogen, oxygen boron and the like. These impurities change the composition of the solid electrolyte and the volume of crystal particle by substituting for the sodium ion and at this time, a stress occurs near the surface where many single crystal grains whose composition has been changed exist, and it breaks the solid electrolyte. Further, the impurities have properties that they penetrate into the grain boundaries of the solid electrolyte to increase the resistance of grain boundaries and to accelerate the deterioration and damage in the grain boundaries. Accordingly, it is necessary for improving the battery life to eliminate the impurities present in sodium. Also, a marked extention of battery life can be expected by eliminating the impurities mentioned above. For achievement of the above-mentioned object, i.e. the extention of battery life by preventing the ion conductive solid electrolyte from deterioration, based on the principle described above, the sodium-sulfur battery of this invention is characterized in that a porous adsorbent is immersed in the sodium which acts as a cathode active substance.

As the porous adsorbent, porous adsorbents such as carbon, graphite, alumina and the like, and high purity porous active carbon are preferable.

BRIEF DESCRIPTION OF THE DRAWINGS

Fig. 1 is a diagrammatic illustration in cross section of an embodiment of sodium-sulfur battery according to this invention; and

Fig. 2 is a diagrammatic illustration in cross section of an example of the conventional sodium-sulfur battery.

DESCRIPTION OF THE PREFERRED EMBODIMENT OF THE INVENTION

Fig. 1 shows an embodiment of this invention. In Fig. 1, numeral 1 designates a β"-alumina solid electrolyte which has high electric conductivity with respect to sodium ion. Since the solid electrolyte 1 has high insulation property with respect to the electronic conductivity, it retains separately sodium 2 which is a cathode active substance and sulfur 3 which is an anode active substance without self-discharging. The sodium in a solid electrolyte tube is separated into a sodium ion and an electron on the surface of solid electrolyte. When an external circuit is not connected between a cathode and an anode of the battery, the sodium ion does not transfer because of the negation

of electric field due to the space charge potential, but when there is a path electrically connecting between the cathode and the anode outside, the sodium ion can transfer to the sulfur electrode in the solid electrolyte. The sodium ion, which has moved from the solid electrolyte into the sulfur electrode, excites the sulfur existing in the anode. The excited sulfur is going to absorb the surrounding free electrons so as to change itself to a bivalent negative ion, and at this time it generates potential energy of about 2.08 volts. The smooth supply of electrons to the anode is indispensable for continuously maintaining such reaction of battery. Therefore, in the anode a felt-like carbon fiber , which has large surface, high non-corrosiveness and good permeability of electron, is disposed to retain the sulfur by impregnation. In such anode, since sodium polysulfide which has high metal-corrosiveness is produced with the progress of battery reaction, a chromized steel which has high non-corrosiveness against the sodium polysulfide, is used for a container 4 of the anode active substance.

As mentioned above, the sodium transfers from the inside of the solid electrolyte tube to the outside at the time of discharge reaction of battery. Therefore, the discharge of battery terminates when the sodium is used up. At the time of charge, on the contrary, the sodium polysulfide in the anode is decomposed into the sodium ion, the sulfur and the

electron, and the sodium ion transfers in the solid electrolyte in accordance with the electric field produced by the voltage applied to the external circuit, and returns into the cathode. That is, the electrical capacity of the sodium-sulfur battery is determined by the quantity of sodium existing in the cathode. If the operating temperature of battery is low, the sodium polysulfide produced at the time of discharge reaction is solidified, and therefore the internal resistance increases and the energy efficiency is reduced. On the other hand, if the temperature is too high, the troubles of high-temperature corrosion, thermal stress and so on are caused. Therefore, the operating temperature of 300°C to 350°C is suitable.

At the operating temperature as mentioned above, the resistivity of β"-alumina which is the solid electrolyte is about 3 to 5 Ωcm. The internal resistance of battery consists of the resistances of the solid electrolyte, anode portion and cathode portion. As to the structure of the cathode portion, it is important for improvement of efficiency to make the internal resistance lower, and it is particularly important to flow the sodium ion uniformly over the region of the solid electrolyte. The reason is that the solid electrolyte has the property deteriorated by electric current and the rate of deterioration is propertionate to the density of electric current. That is, in the portion where the electric current flows more than

the other portions the electrolyte is damaged more, and the life of the whole solid electrolyte is defined by the portion where the current is concentrated. In order to flow the electric current uniformly over the region of the solid electrolyte, it is necessary that all of the cathode surface of the solid electrolyte is in contact with the sodium. However, since the quantity of sodium in the cathode is increased or decreased by the charge or discharge reaction, the liquid surface of sodium changes. Therefore, in the embodiment the cathode tube 5 is disposed in the solid electrolyte tube to form a double tube structure and in addition the region between the cathode tube and the solid electrolyte tube is filled with metal fiber 9 . As to the metal fiber, a felt of stainless material, diameter of which is not more than 30 μm, is preferable because it has good wettability to sodium, hence the effect of capillarity is enhanced, and also it has good non-corrosiveness. The sodium is absorbed upward by surface tension in the metal fiber and is supplied to all of the internal wall of the solid electrolyte.

When the battery which has the above structure is manufactured, the sodium as the cathode active substance is injected into the solid electrolyte through a sodium injection tube 10, and then it is enclosed. Though the sodium to be injected is produced in advance by eliminating K and Ca by purification methods such as distillation and adsorption methods, these impurities

are existing in large quantities on the ground and there is a great possibility that the impurities adhere to the surface of the cathode component material. In fact, in the battery which does not have the structure according to this invention, as a result of checking up the solid electrolyte after the charge and discharge of about 100 cycles, the amount of Ca as the impurity increased about four times. That is, the impurities intermingled in the cathode at the time of manufacture move in the solid electrolyte with the sodium and are captured therein. These impurities are built-up in the solid electrolyte by replacing the sodium which forms a crystal of the solid electrolyte. At that time, the change of component causes change of the crystal structure of the solid electrolyte and deformation of the crystal. Therefore, stress is generated in the electrolyte to cause micro-cracking. In addition, since the solid electrolyte in which the impurities are built-up increases the resistance, it deteriorates in efficiency to become unsuitable for practical use even if it would not be broken. Accordingly, a method of enclosing in the cathode a substance for eliminating impurities is desirable for manufacturing the battery which is good in performance and life.

In the embodiment of Fig. 1, the elimination of impurities as mentioned above is realized by an adsorbing action of porous amorphous carbon 12 which is disposed in the bottom of the cathode tube 5. The carbon

was manufactured by The Fluorocarbon Company, Anaheim, California 92803, U.S.A. Though there are various kinds of porous amorphous carbon now, one having a specific surface area of 2500 $m^2/g$ was used. When the specific surface area is so large as above, the amount of the carbon to be used can be much smaller. The reason is that an ability of adsorbing the impurities is proportionate to the surface area of carbon material. When the above material was used, the impurities were eliminated satisfactorily (0.5 ppm, a limit of detection, or less) only by use of about 50mg of carbon per 100g of sodium.

As the carbon materials which have large specific surface area, there is provided a graphite felt material which can be obtained by heat treating a raw material of fiber at 2500°C or more. However, this can't give an effect comparable to the amorphous carbon because of smaller specific surface area by one figure, lower purity and so on.

In use of the amorphous carbon in sodium, it is important that the whole body of the carbon is in the sodium in addition to the maintainance of high purity as mentioned above. Since the amorphous carbon has small pores and air bubbles or the like can't easily escape upward if it adheres to the carbon, there is a possibility that the carbon floats on the liquid surface of sodium. If the amorphous carbon floats, the surface area of the carbon in which it is in contact

with the sodium is reduced, so this is undesirable. Accordingly, it is required to always secure the carbon in the sodium. In the embodiment, a holding projection 13 secures the carbon in the bottom of the cathode tube. This position is set in a path through which the sodium is fed to the solid electrolyte tube, and also in a place where the sodium flows with the electric charge and discharge. In addition, it is most preferable as a position where the carbon is disposed because the carbon keeps in contact with the sodium until the discharge terminates. When the sodium moves in the place where the carbon exists, the impurities which are eliminated fundamentally by diffusion can also be eliminated by flow effect through a filter, thus the above disposition of carbon is preferable for elimination of impurity.

The sodium-sulfur battery which has the structure as mentioned above continues stable charge and discharge without increase of internal resistance even if the charge and discharge are generated at more than a few hundred cycles. On the contrary, in the battery which does not use the amorphous carbon the increase of internal resistance is remarkable, and it is found, as a result of analysis and check up after examination, that the amount of impurities in the solid electrolyte increased. That is, the performance and life of battery can be improved by elimination of impurities through the amorphous carbon.

As set forth hereinabove, according to this invention, it is possible to adsorb the impurities in sodium to be harmless, and therefore the deterioration of solid electrolyte is prevented so that the life of battery can be remarkably extended.

CLAIMS:

1. A sodium-sulfur battery comprising sodium as a cathode active substance (2) and molten sulfur or molten sodium polysulfide impregnated to a porous and electrically conductive material as an anode active substance (3), which effects electrochemical reactions of said cathode active substance (2) and said anode active substance (3) to charge or discharge through a solid electrolyte (1) having conductivity only for sodium ion, characterised in that a porous adsorbent (12) is immersed in said sodium as cathode active substance (2).

2. The battery of claim 1, wherein said porous adsorbent (12) is a substance having a function of adsorbing to a surface thereof alkali metal except sodium and/or alkali earth metal which have electrochemically positive polarity and act as an impurity in sodium.

3. The battery of claim 2, wherein said porous adsorbent (12) is porous amorphous carbon.

4. The battery of claim 2, wherein said impurity in sodium is potassium ion ($K^+$) and/or calcium ion ($Ca^{2+}$).

5. The battery of claim 1, wherein said porous adsorbent (12) immersed in said sodium is disposed near the closed bottom of tubular solid electrolyte (1) filled with said sodium as cathode active substance (2).

FIG. 1

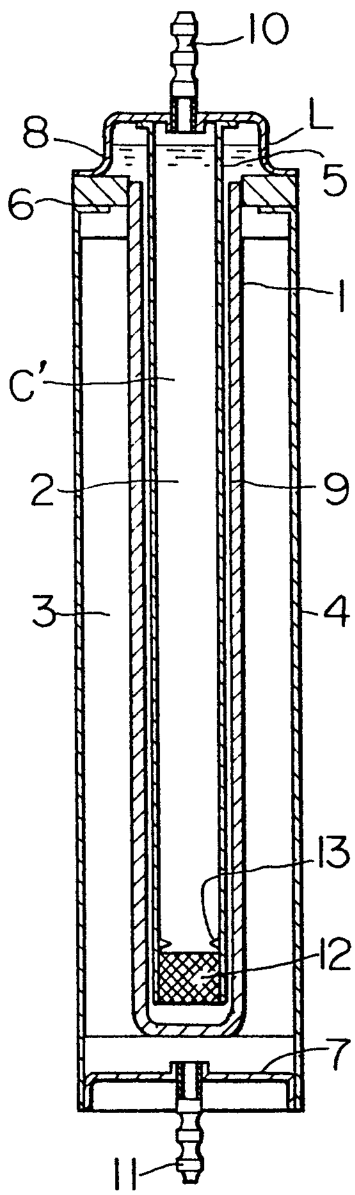


FIG. 2